# EUROPEAN PATENT APPLICATION

(11) **EP 1 011 234 A1**
(43) Date of publication of application: **21.06.2000**
(21) Application number: 98124139.1
(22) Date of filing: 18.12.1998
(51) Int. Cl.: H04L 27/26

(54) **Synchronisation of a RF receiver using chirp signals with a passive correlator**

(71) Applicant: Sony International (Europe) GmbH, 10785 Berlin (DE)
(72) Inventor: Enderlein, Janos Dr.-Ing., Stuttgarter Strasse 106 70736 Fellbach (DE)
(74) Representative: MÜLLER & HOFFMANN Patentanwälte

(57) **Abstract**

In OFDM systems chirp signals that have a very good auto-correlation characteristic are generated using the OFDM modulator. The receiver according to the present invention includes a SAW chirp filter circuit (16) that performs an correlation with an incoming chirp signal with the help of an appropriate matched filter, such as a surface acoustic wave filter. Therefore, the carrier frequency can be adjusted with low hardware complexity. Furtheron, also the symbol timing of the OFDM demodulator (14) can be controlled by the SAW chirp filter circuit (16) in an easy manner and therefore low power consumption of the whole receiver can be assured, since at least the digital stage is not needed during the detection of the synchronization signal and can therefore be set into a sleeping mode until an appropriate synchronization signal is detected.

## Description

The present invention relates to a method to synchronize a RF receiver to a RF signal generated by a RF transmitter, to a method to decrease the power consumption of such a receiver and to a method to perform the symbol timing of an OFDM receiver, in particular to perform these methods when a chirp signal is used as synchronization burst signal. Furtheron, the invention concerns a RF receiver capable to perform the inventive methods.

State of the art OFDM receivers perform a frame synchronization using pseudo noise sequences or two identical OFDM symbols. In case pseudonoise sequences are used, the frame synchronization is performed by transmission of a pseudo noise sequence at the beginning of each frame. The pseudo noise code is generated using shift registers and a subsequent spectrum shaping is performed using a FIR filter, e. g. a root-cosine filter. The transmission modes, either pseudo noise sequence transmission or data transmission, are selected by a mode selector switch. In the receiver, the transmitted pseudo noise sequence is correlated using digital signal processing to perform the frame synchronization.

This synchronization using pseudo noise sequences and related techniques lead to more hardware and higher power consumption, since an additional signal source in the transmitter and a pseudo noise generator, a FIR filter and a transmission mode selector in the receiver are necessary. Also, the digital signal processing of the complete received signal stream to detect the pseudo noise code leads to high power consumption.

In case two identical OFDM symbols are used for synchronization, two succeeding identical OFDM signals are generated and transmitted. The received signal stream is correlated due to delaying the first symbol and subsequent multiplying it with the second symbol (sample by sample). The symbol time synchronization is achieved by detecting a correlation peak. Applying this technique, analogue devices for delaying and multiplying are necessary.

This synchronization using two identical OFDM symbols and related techniques leads to lower transmission rates, since the transmission of two symbols brings more overhead (compared to pseudo noise sequences). Furthermore, an extensive analogue signal processing device comprising delay lines, multipliers etc. is necessary and a reliable reception of both identical OFDM signals is needed.

The WO 96/19056 describes a method at OFDM reception for correction of frequency, time window, sampling clock, and slow phase variation by arranging at least one up-chirp and one down-chirp in respective frames of an OFDM signal. The correction of the frequency is made based on an analysis of the up-and down-chirps. This analysis is performed in the baseband stage after down-conversion and A/D processing. Therefore, in order to detect a position of the chirp signal, a set of digital correlators is used.

The WO 96/02990 discloses a method and device for synchronization of transmitter and receiver in a digital system. Like in the WO 96/19056 described above, this document describes a pre-FFT-synchronization in an OFDM system on the received signal before conversion from the time domain to the frequency domain. It is described that one or more synchronization frames contain a chirp signal and that the chirp signals in adjacent frames have their frequencies changing in opposite senses. Like in the WO 96/19056 a bit pattern is stored in the receiver which corresponds to the recorded chirp signal, e. g. the chirp signal after it has been digitally processed by the receiver, and the received signal is compared with the stored bit pattern after digital processing.

In comparison to the synchronization using pseudo noise sequences no pseudo noise generator, FIR filter and transmission mode selector are necessary in the receiver and therefore not more hardware is needed. Nevertheless, the digital processing of the complete received signal stream still leads to high power consumption. In comparison to the synchronization using two identical OFDM symbols and related techniques no extensive analogue signal processing device is necessary, no reliable reception of two following signals is needed and the transmission rate is not decreased.

However, an OFDM receiver working according to the methods disclosed in WO 96/19056 and/or WO 96/02990 has a high power consumption, since the digital processing of the complete received signal stream is necessary to detect the chirp signal. Additionally, in the receiver a bit pattern has to be stored which corresponds to the decoded chirp signal and the comparison of the received signal is performed using a set of digital correlators.

Therefore, it is the object underlying the present invention to provide an improved RF receiver that overcomes the disadvantages mentioned above, i. e. has a very precise correction of the carrier frequency and in case of OFDM receivers also of the symbol timing as well as a low power consumption.

The RF receiver according to the present invention is defined in claim 1, the inventive methods to adjust the carrier frequency and in case of OFDM receivers also the symbol timing as well as to lower the power consumption are defined in independent claims 17, 23 and 21, respectively. Preferred embodiments thereof are respectively defined in the following subclaims.

According to the present invention, a passive correlator is used in order to detect the predetermined synchronization burst signal. In this passive correlator the incoming predetermined synchronization burst signal is compressed to a much shorter signal by delaying each sub-part of the input signal spectrum different amounts so that each sub-part arrives at the output of the correlator in the same instant. The pulse compression ratio is selected so that a matched filtering of the predetermined synchronization burst signal is performed that is a generalization of pulse compression which states that given a received signal s(t) and spectrum S(f), the matched filter is that receiver filter which maximizes the output signal to noise ratio and has an impulse response s(-t) and a frequency response conjugate (S(f)).

According to a preferred embodiment of the present invention a surface acoustic wave (SAW) filter circuit is implemented in the receiver as matched filter. In this unit the received signal is correlated by a SAW matched filter and the output signal of the SAW filter circuit is used for frequency correction as well as for symbol timing in an OFDM receiver.

A SAW device consists of pairs of interdigital metallic transducers that are mounted on the surface of piezoelectric material, such as quartz. One set of transducers is excited with an electric signal that causes a surface wave to propagate on the other set of transducers. With the proper electric signal and properly designed surface acoustic waves, e. g. a LFM (Linear Frequency Modulated) wave form of the predetermined synchronization burst signal is pro-produced. Pulse compensation is done in SAW devices in much the same manner with one set of transducers exciting surface waves that are propagated to the other set of transducers.

According to the preferred embodiments of the present invention chirp signals are used as predetermined synchronization burst signals for frequency adjustment and in OFDM systems also for symbol timing purposes, since these signals combine merits as constant signal amplitude, flat power spectrum, and high auto-correlation performance and are therefore highly appreciated for synchronization techniques.

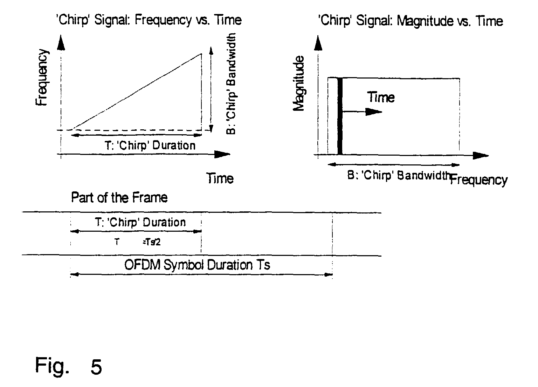

A chirp signal can be referred to as a linear frequency modulated wave form, because the frequency changes linearly over the bandwith B across the pulse length T, as can be seen in Fig. 5. Therefore, the pulse compression ratio of the matched filter is set to B·T. Without any additional devices chirp signals can be generated as suitable burst signals using the inverse fast Fourrier transformation (IFFT) function within the orthogonal frequency division multiplex (OFDM) modulator of a common OFDM transmitter.

Using chirp signals and passive correlators, such as a SAW device, a much better auto-correlation characteristic, e. g. lower side lobes, can be achieved in comparison with the filtered pseudo noise sequence.

Furthermore, using a passive device in the IF or AF stage to detect the incoming synchronization burst offers the advantage that the digital circuits in the receiver may completely hold their operation (in a sleeping mode) to save power. After indication of an incoming synchronization burst the digital circuits in the receiver can be switched on to start operation.

In addition, the transmitter side of an OFDM system does not need a code generator for pseudo noise code generation, since an appropriate chirp signal can be generated with a special binary data input sequence within the transmitter.

Furtheron, SAW devices can be designed that can handle not only RF signals (that are available after the first down-converter stage and before the digital stage in the receiver), but that can handle the incoming signals directly or after an amplification or that can handle the signals available after the RF stage of the receiver. In this case, not only the digital circuits in the receiver can completely hold their operation in sleeping mode, but nearly the whole receiver or in fact the whole receiver apart from the SAW chirp filter circuit. In fact also within the SAW filter circuit only the passive SAW device itself is needed to detect the incoming chirp signal with the help of the implemented corresponding fixed code and therefore all other devices can be switched off, since a very sharp peak is produced that can be taken to switch on the power for all other devices. Of cource, a circuit to switch on the power supply needs to be waked up or on hold so that a switching on of the power supply can be performed.

The special SAW chirp filter that is needed in the receiver has a small size and can be produced at low cost so thatbesides the possibility to lower the power consumption a very good synchronization signal detection due to the high correlation gain and therewith the synchronization of the carrier frequency and in case of OFDM systems the simultaneous synchronization of the symbol time is achieved with very simple means that can be easily implemented.

The term chirp signal is used throughout this description not only for ideal chirp signals, but also for chirp signals that are generated digitally, that are sampled or that include distortions because they are transmitted via a wireless channel.

The present invention will be better understood from the following detailed description of exemplary embodiments thereof taken in conjunction with the accompanying drawings, wherein
- **Fig. 1**: shows an OFDM transmitter-receiver-block according to the present invention;
- **Fig. 2**: shows a single SAW chirp filter circuit for symbol timing and frequency adjustment according to a first preferred embodiment of the present invention;
- **Fig. 3**: shows a double SAW chirp filter circuit for symbol timing and frequency adjustment according to a second preferred embodiment of the present invention;
- **Fig. 4**: shows a circuit for fine frequency adjustment to be used in the double SAW chirp filter circuit shown in Fig. 3; and
- **Fig. 5**: shows the signal characteristics of a chirp signal.

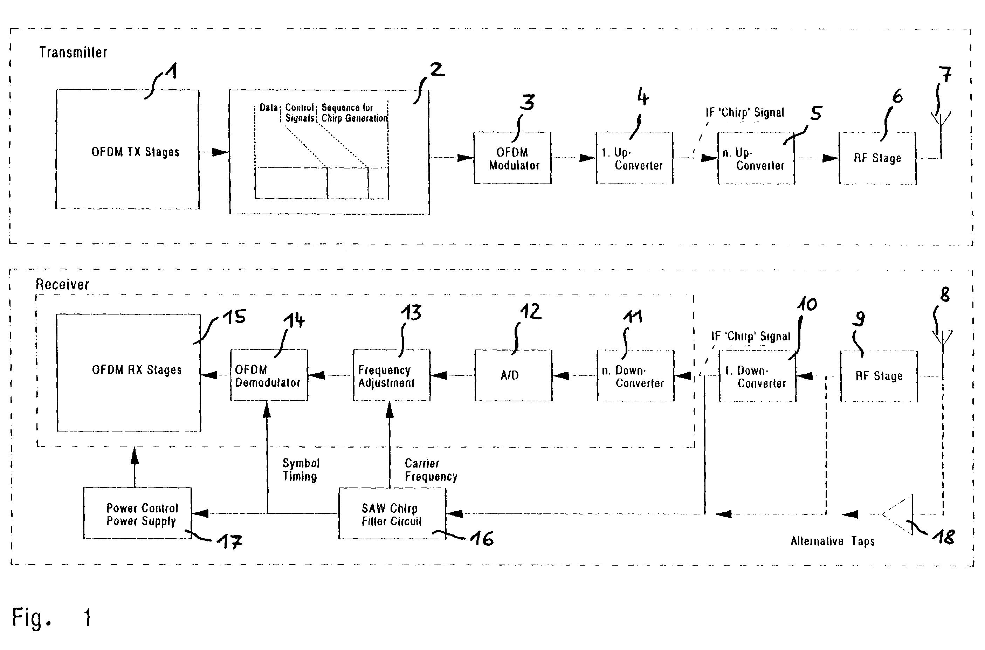

Fig. 1 shows as an example an OFDM transmitter-receiver-block according to the present invention. As mentioned above, according to thepreferred embodiments of the present invention a chirp signal is transmitted from the transmitter as a synchronization signal that is received by the receiver, i. e. the passive correlation circuit of the receiver to be used to adjust the carrier frequency and the symbol timing as well as to control the power supply.

The transmitter shown in Fig. 1 consists of the common OFDM transmitter stages 1, which produce a frame signal 2 containing data, control signals, and a sequence for chirp generation. Such frames 2 are fed to an OFDM modulator 3 the output signal of which gets up-converted to an AF signal by a first up-converter stage 4. The AF signal gets again up-converted by a n. up-converter stage 5 before the output signal of said n. up-converter stage is applied to the antenna 7 of the transmitter via a RF stage 6.

In order to transmit an appropriate chirp signal via the antenna 7, a special binary data input sequence, i. e. the sequence for chirp signal generation, is necessary. This sequence can be found by backward calculation of the signal in the transmitter path. Once this has been done by an OFDM demodulation, including fast Fourrier transformation (FFT) and other signal processing stages, with a chirp signal which is appropriate for auto-correlation, the derived special binary data input sequence is stored within the OFDM transmitter stages 1 so that the appropriate chirp signal can be easily generated during transmission.

The sequence for chirp signal generation is then fed into the common OFDM transmitter path as depicted in Fig. 1 and explained above to perform a synchronization. The OFDM modulator which includes the inverse fast Fourrier transformation (IFFT) transforms the sequence for chirp signal generation which is processed by the previous OFDM transmitter stages 1, e. g. by a coder/interleaver, into a chirp signal. After the conventional signal transmission using up-conversion and the RF stage of the transmitter, the signal enters the receiver.

The receiver consists of the common receiver path including an antenna 8 that is connected to a RF stage 9 (containing e. g. filters, amplifiers and switches), the output signal of which gets down-converted to an IF signal by a first down-converter stage 10. Thereafter, the IF signal gets further down-converted with a n. down-converter stage 11 before being digitized with an A/D converter 12. Thereafter, the digital signal is applied to a frequency adjustment circuit 13 before an OFDM demodulator 14 performs the demodulation so that the following OFDM receiver stages 15 can process the demodulated signal.

The receiver according to the present invention further comprises a SAW chirp filter circuit 16 that receives the IF signal after the first down-converter stage 10 or the RF signal that can be obtained after the RF stage 9 or even the incoming signal from the antenna 8 that can either be amplified with an amplifier 18 or obtained directly from the antenna 8.

The SAW chirp filter circuit 16 is used to provide a control signal for the frequency adjustment circuit 13, a control signal for the OFDM demodulator 14 used for symbol timing and also a control signal for a power control/power supply circuit 17 that can set all parts of the receiver into sleeping mode, i. e. switch off their power, that don't have to be used for detection of the chirp signal and that can also activate these parts in case a chirp was received.

In case the SAW chirp filter circuit receives the IF signal that is output from the first down-converter stage 10, as indicated with a solid line in Fig. 1, the power control/power supply circuit 17 can switch off the OFDM receiver stages 15, the OFDM demodulator 14, the frequency adjustment circuit 13, the A/D converter 12 and the n. down-converter stage 11 (including a mixed and an amplifier), as it is indicated by a dash two dot line in Fig. 1. If on the other hand the SAW chirp filter circuit 16 receives the RF signal from the RF stage 9 also the first down-converter stage 10 can be switched off by the power control/power supply circuit 17. Furtheron, also the RF stage 9 can be switched off in case the SAW chirp filter circuit 16 receives the RF signal directly or via the amplifier 18 from the antenna 8.

In a preferred embodiment the passive SAW filter is integrated together with active high frequency devices on an active piezoelectric semiconductor, e. g. GaAs which is a very good material to be used for active circuit parts of wireless home networks that work with very high frequency bands as 5 to 6 GHz. The SAW chirp filter circuit generates signals for power control, e. g. wake up from a sleep modus, symbol timing and carrier frequency adjustments using appropriate signal processing techniques.

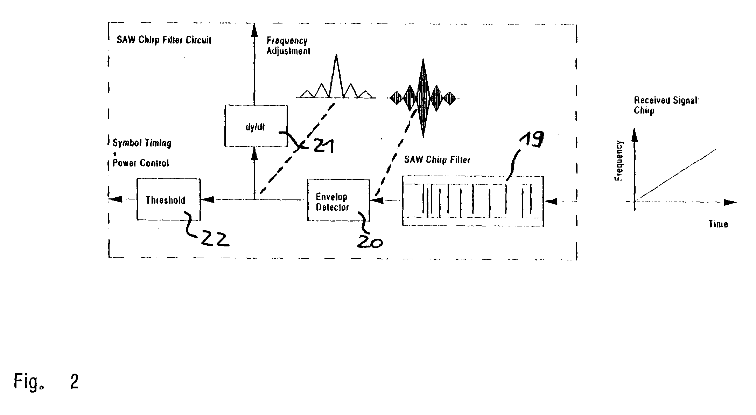

Fig. 2 shows a single SAW chirp filter circuit for symbol time and frequency adjustment as a first preferred embodiment of the passive correlator according to the present invention. The received single chirp is detecting using a SAW chirp filter as passive correlator. This chirp signal can be an up-chirp signal as shown in Fig. 5 or a down-chirp signal that starts with the high frequency and after the chirp duration T ends with the low frequency. Fig. 2 shows an up-chirp signal as received signal with increasing frequency over the time at the right hand side of the figure. Assuming the match of the received signal with the impulse response of the filter, i. e. the incorporated corresponding fixed code of the filter, a correlation peak is generated. This correlation peak is shown at the output of the SAW chirp filter 19 in Fig. 2. Using this SAW chirp filter no additional signals or power supplies for signal correlation are necessary. Additionally, the signal processing is performed in real time and the output signal is characterized by a high peak to side lobe ratio. After a appropriate signal transformation, e. g. square and low pass filtering, with an envelop detector 20 an envelop signal is generated that is shown in Fig. 2 at the - output of the envelop detector 20. The envelop signal gets differentiated, e. g. measured at the threshold point, and the differentiated envelop signal is used for frequency adjustment. Additionally, the envelop signal gets detected by a threshold detector 22 to provide the control signals for symbol timing and power control.

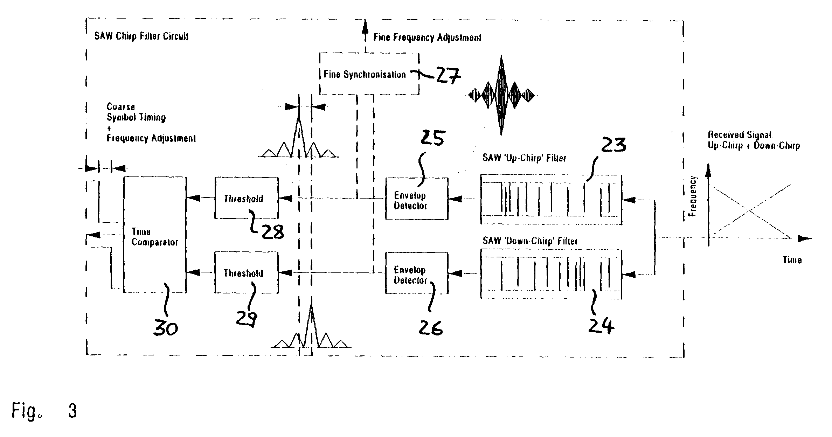

Fig. 3 shows as a second preferred embodiment of the SAW chirp filter circuit 16 a double SAW chirp filter circuit for symbol timing and frequency adjustment. This circuit can also output a control signal for the power control power supply 17 as the circuit described in connection with Fig. 2.

In this case, the received signal contains a superimposed up-chirp- and down-chirp-signal, as it is shown at the right hand side of Fig. 3. Both signals are independently received by a SAW up-chirp-filter 23 and a SAW down-chirp-filter 24. Both filters are working in a parallel fashion and basically similar to the SAW chirp filter 19 that can either detect an up-chirp- or a down-chirp-signal and detects an up-chirp signal in the first preferred embodiment described in connection with figure 2. For temperature stability reasons both filters are preferably assembled on a single substrate.

The SAW up-chirp-filter 23 and the SAW down-chirp-filter 24 both output a respective correlation signal that contains a correlation peak which is indicated in Fig. 3 only for the SAW up-chirp-filter 23 in case the received signal matches the fixed code implemented in the respective filter. The correlation signal of the SAW up-chirp-filter 23 is input to an envelop detector 25 and the correlation signal of the SAW down-chirp-filter 24 is input to an envelop detector 26. Both envelop signals are indicated in Fig. 3.

On basis of both envelop signals a fine synchronization circuit 27 outputs a control signal for fine frequency adjustment to the frequency adjustment circuit 13.

Furtheron, the input of a threshold detector 28 is connected to the envelop detector 25 and the input of a threshold detector 29 is connected to the output of the envelop detector 26. As indicated in Fig. 3, a time comparator 30 outputs a control signal for coarse symbol timing to the OFDM demodulator 14 on basis of the time difference in between the occurrence of both thresholds.

The time difference between the detected up-chirp- and down-chirp-signals is a function of the frequency of said receiver frequency and transmitter (center) frequency. As closer the correlation peaks are together, the better is the matching of both frequencies. The occurrence time of the peaks depends from the sign (positive or negative) of the offset, e. g. if the transmitter frequency is lower than the receiver frequency the first peak is generated by the up-chirp-filter and the second peak is generated by the down-chirp-filter and in the reverse way, if the transmitter frequency is higher than the receiver frequency, the first peak is generated by the down-chirp-filter and the second peak is generated by the up-chirp-filter. Both peaks get together when both frequencies are (technically) the same. Following this way, a coarse symbol timing and frequency adjustment can be achieved when both signals are close together. The necessary control signals for the frequency adjustment stage 13 are delivered by the threshold detectors 28 and 29 and the time comparator 30 on basis of the time difference in between the occurrence of both thresholds and the order of the occurrence of both thresholds that indicates a positive or negative offset.

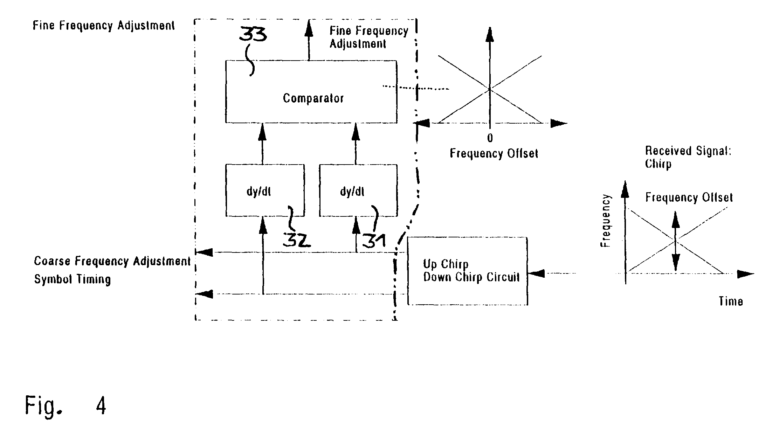

Fig. 4 shows a performed embodiment of the fine synchronization circuit 27 shown in Fig. 3. The envelop signal output by the envelop detector 25 is input to a differentiation circuit 32 and the output signal of the envelop detector 26 is input to a differentiation circuit 31. The respectively differentiated correlation signals, e. g. at the threshold, are used for fine frequency adjustment via a comparator 33 that compares both differentiated correlation signals and outputs the control signal for fine frequency adjustment, as it is also shown in Fig. 3.

The difference between both differentiated correlation signals is a function of the frequency offset between receiver and transmitter frequency. The signals caused by up- and down-chirp-processing (differentiation of the correlation signals) have a opposite characteristic (magnitude versus frequency offset), e. g. if the transmitter frequency is lower than the receiver frequency, the signal magnitude caused by the up-chirp-signal is larger and the signal magnitude caused by the down-chirp-signal is lower and in the reverse way, if the transmitter frequency is higher than the receiver frequency, the signal magnitude caused by the up-chirp-signal is lower and the signal magnitude caused by the down-chirp-signal is larger. The intersection of the curves marks the point where both frequencies are (technically) the same, as it is indicated in Fig. 4.

This differential approach offers a fine frequency adjustment over a higher frequency offset range than the method described in connection with Fig. 2.

Of course, the invention cannot only be applied to OFDM systems, as described above, but also to all RF systems to perform a carrier frequency adjustment and to implement a sleeping mode into the receiver so that high power consumption only exists in case an appropriate RF signal is received. With appropriate SAW filters or other passive correlators also a detection in typical high frequency RF bands is possible, i. e. a direct detection of the synchronization signal without necessary down-conversion, so that also the down-conversion stages and the RF stage of the receiver can be set into sleeping mode.

Especially in OFDM transmitters no additional code generator is necessary, since the chirp signal can be generated very easily on basis of a special binary sequence for chirp generation.

## Claims

1. RF receiver, comprising an antenna (8) to receive a RF signal that includes at least one predetermined synchronization burst signal, **characterized by** at least one passive correlator (19; 23, 24) each of which receives the output signal of said antenna (8), includes a fixed code of one of said predetermind burst signals and outputs a respective correlation peak every time the corresponding predetermined synchronization burst signal is received to perform a carrier frequency adjustment and/or symbol timing and/or power control within the RF receiver.

2. RF receiver according to claim 1, **characterized by** a RF stage (9) that is connected to said antenna (8) and outputs a RF signal to said passive correlator (19; 23, 24) so that said passive correlator (19; 23, 24) receives said output signal of said antenna (8) via said RF stage (9).

3. RF receiver according to claim 2, **characterized by** a first down-converter stage (10) that is connected to said antenna (8) via said RF stage (9) and outputs an IF signal to said passive correlator (19; 23, 24) so that said passive correlator (19; 23, 24) receives said output signal of said antenna (8) via said RF stage (9) and said first down-converter stage (10).

4. RF receiver according to anyone of claims 1 to 3, **characterized in that** said at least one passive correlator (19; 23, 24) is a surface acoustic wave filter.

5. RF receiver according to anyone of claims 1 to 4, **characterized by** at least one envelop detector (20; 25, 26) that is respectively connected to one of said passive correlators (19; 23, 24) to generate an envelop signal of the correlation signal output by the corresponding passive correlator (19; 23, 24).

6. RF receiver according to claim 5, **characterized by** at least one differentiation circuit (21; 31, 32) that is respectively connected to one of said envelop detectors (20; 25, 26) to generate a differentiated signal of the envelop signal output by the corresponding envelop detector (20; 25, 26) to be input to a frequency adjustment circuit (13) as a control signal for adjustment of the carrier frequency.

7. RF receiver according to claim 5 or 6, **characterized by** a comparator circuit (33) connected to two differentiation circuits (31, 32) that are respectively connected to one envelop detector (25, 26) to generate a fine frequency adjustment signal to be input to a frequency adjustment circuit (13) as a control signal for fine adjustment of the carrier frequency.

8. RF receiver according to anyone of claims 5 to 7, **characterized by** at least one threshold detector (22; 28, 29) that is respectively connected to one of said envelop detectors (20; 25, 26) to generate a threshold signal of the envelop signal output by the corresponding envelop detector (20; 25, 26) that indicates the point of time at which the envelop signal is larger than a predetermined threshold.

9. RF receiver according to claim 8, **characterized in that** said threshold signal is input to a power control/power supply circuit (17) as a control signal for switching on predetermined processing stages.

10. RF receiver according to claim 9, **characterized in that** said predetermined processing stages include all processing stages that are in the signal path of the received signal after the received signal has been converted to an IF signal.

11. RF receiver according to claim 10, **characterized in that** said predetermined processing stages include the first down-converter stage (10).

12. RF receiver according to claim 10 or 11, **characterized in that** said predetermined processing stages include the RF stage (9).

13. RF receiver according to anyone of claims 8 to 12, **characterized in that** said threshold signal is applied to an OFDM demodulator (14) as a control signal for symbol timing.

14. RF receiver according to anyone of claims 8 to 13, **characterized in that** said threshold signals of two threshold detectors (28, 29) are applied to a time comparator (30) that outputs a signal indicating the time difference of the occurance of the respective points of time at which the respective envelop signals are larger than a predetermined threshold to an OFDM demodulator (14) as a control signal for symbol timing.

15. RF receiver according to anyone of claims 8 to 14, **characterized in that** said threshold signals of two threshold detectors (28, 29) are applied to a time comparator (30) that outputs a signal indicating the time difference of the occurance of the respective points of time at which the respective envelop signals have a level above a predetermined threshold to a frequency adjustment circuit (13) as a control signal for adjustment of the carrier frequency.

16. RF receiver according to anyone of claims 1 to 15, **characterized in that** said predetermined burst signal is a chirp signal.

17. Method to perform a frequency adjustment of a RF receiver to a RF signal that includes at least one predetermined synchronization burst signal, **characterized by** the following steps:
detecting a respective predetermined synchronization burst signal in the received RF signal with a passive correlator (19: 23, 24) that includes the corresponding fixed code of one of the predetermined synchronization burst signals and outputs a respective correlation peak every time the corresponding predetermined synchronization burst signal is received, and
adjusting the frequency of the RF receiver based on the respective correlation signal/s.

18. Method according to claim 17, **characterized by** the following steps:
detecting an envelop signal of said respective correlation signal, and
differentiating said envelop signal to obtain a control signal for frequency adjustment.

19. Method according to claim 17 or 18, **characterized by** the following steps:
detecting respective envelop signals of said respective correlation signals,
differentiating said envelop signals, and
comparing said envelop signals to obtain a control signal for frequency adjustment.

20. Method according to claim 17 or 18, **characterized by** the following steps:
detecting respective envelop signals of said respective correlation signals,
detecting when said envelop signals have a level above a predetermined threshold, and
generating a signal indicating the time difference of the occurance of the respective points of time at which the respective envelop signals have a level above said predetermined threshold to obtain a control signal for frequency adjustment.

21. Method to perform a power control in a RF receiver that receives a RF signal that includes at least one predetermined synchronization burst signal, **characterized by** the following steps:
detecting a respective predetermined synchronization burst signal in the received RF signal with a passive correlator (19; 23, 24) that includes the corresponding fixed code of one of the predetermined synchronization burst signals and outputs a respective correlation peak every time the corresponding predetermined synchronization burst signal is received, and
outputting a control signal for supplying all parts of the RF receiver not needed during detection of said respective predetermined synchronization burst signal with power based on the respective correlation signal/s.

22. Method according to claim 21, **characterized by** the following steps:
detecting an envelop signal of said respective correlation signal, and
detecting when said envelop signals have a level above a predetermined threshold to obtain said control signal for power supply.

23. Method to perform a symbol timing of an OFDM RF receiver to a OFDM RF signal that includes at least one predetermined synchronization burst signal, **characterized by** the following steps:
detecting a respective predetermined synchronization burst signal in the received OFDM RF signal with a passive correlator (19; 23, 24) that includes the corresponding fixed code of one of the predetermined synchronization burst signals and outputs a respective correlation peak every time the corresponding predetermined synchronization burst signal is received, and
outputting a control signal for symbol timing of the OFDM RF receiver based on the respective correlation signal/s.

24. Method according to claim 23, **characterized by** the following steps:
detecting an envelop signal of said respective correlation signal, and
detecting when said envelop signals have a level above a predetermined threshold to obtain said control signal for symbol timing.

25. Method according to claim 23, **characterized by** the following steps:
detecting respective envelop signals of said respective correlation signals,
detecting when said envelop signals have a level above a predetermined threshold, and
generating a signal indicating the time difference of the occurance of the respective points of time at which the respective envelop signals have a level above said predetermined threshold to obtain a control signal for symbol timing.

26. Method according to anyone of claims 17 to 25, **characterized in that** said respective predetermined synchronization burst signal is detected direct from the RF signal received by an antenna (8).

27. Method according to anyone of claims 17 to 25, **characterized in that** said respective predetermined synchronization burst signal is detected from an amplified RF signal received by an antenna (8) via an amplifier (18).

28. Method according to anyone of claims 17 to 25, **characterized in that** said respective predetermined synchronization burst signal is detected from a RF signal received by an antenna (8) via a RF stage (9).

29. Method according to claim 28, **characterized in that** said respective predetermined synchronization burst signal is detected from a IF signal that is obtained by down-conversion of said RF signal received by an antenna (8) via a RF stage (9).

30. Method according to anyone of claims 17 to 29, **characterized in that** said respective predetermined synchronization burst signal has a flat power spectrum and/or a high auto-correlation performance and/or a constant signal amplitude.

31. Method according to anyone of claims 17 to 30, **characterized in that** said respective predetermined synchronization burst signal is an up-chirp signal, a down-chirp signal or a superimposed up-chirp and down-chirp signal.
